(19) **Europäisches Patentamt**
**European Patent Office**
**Office européen des brevets**

(11) **EP 4 339 562 A1**

(12) **EUROPEAN PATENT APPLICATION**

(43) Date of publication:
**20.03.2024 Bulletin 2024/12**

(21) Application number: **22195755.8**

(22) Date of filing: **15.09.2022**

(51) International Patent Classification (IPC):
**G01F 1/704** (2006.01)   **G01F 1/708** (2022.01)
**G01F 1/7084** (2022.01)   **G01F 1/712** (2006.01)

(52) Cooperative Patent Classification (CPC):
**G01F 1/7044; G01F 1/708; G01F 1/7084;
G01F 1/712**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BDR Thermea Group B.V.
7332 BD Apeldoorn (NL)**

(72) Inventors:
• **VAN DE WEERD, Mathijs
7332 BD Apeldoorn (NL)**
• **CONNEMAN, Gijsbert
7332 BD Apeldoorn (NL)**

(74) Representative: **Dennemeyer & Associates S.A.
Postfach 70 04 25
81304 München (DE)**

(54) **FLOW RATE MEASURING METHOD FOR A GAS BOILER**

(57)    Method (100) for measuring the flow rate of a fluid in a conduit system (6) of a combustion appliance (1), in particular a gas boiler, the method (100) comprising measuring (S101) a first temperature value (T1) of the fluid at a first point (P1) of the conduit system (6) by a first temperature sensor (2) and generating a first temperature signal (S1); measuring (S102) a second temperature value (T2) of the fluid at a second point (P2) of the conduit system (6) by a second temperature sensor (3) and generating a second temperature signal (S2), the second point (P2) being downstream the first point (P1); calculating (S103) a time delay ($\Delta$t) between the temperature measurement at the first point (P1) and at the second point (P2); and determining (S104) the flow rate based on said time delay ($\Delta$t) and a volume of the fluid in the conduit system (6) between the first point (P1) and the second point (P2).

FIG. 2

EP 4 339 562 A1

## Description

The invention relates to a method for measuring the flow rate of a fluid in a conduit system of a combustion appliance, in particular a gas boiler. Also, the invention relates to a computer program product executed by a computer carrying out the above method, a data processing apparatus comprising a processor for executing said computer program product, a computer readable data carrier having stored thereon the computer program product, and a data carrier signal carrying the computer program product. In addition, the invention relates to a system for measuring the flow rate of a fluid in a conduit system of a combustion appliance, in particular a gas boiler and to a combustion appliance comprising means for carrying out the method and/or said data processing apparatus and/or said system. Also, the invention relates to a use of the computer program, or the data processing apparatus, or the system for measuring the flow rate of a fluid in a conduit system of a combustion appliance, in particular a gas boiler.

Combustion appliances such as gas boilers combust gaseous fuel to heat water for domestic use and/or central heating system facilities in buildings. The measurement of the flow rate of the water in the conduit of a combustion appliance is usually carried out by using one or more dedicated flow sensors arranged in the conduit. This however means that additional sensors are needed in a heating system in order to have information regarding the flow rate of the water flowing in the conduit of the system. As a consequence, the production and maintenance costs are increased due to the necessity of installing additional components in the heating system.

It is therefore desirable to obtain an efficient and cost-effective method for obtaining information on the flow rate in a combustion appliance, without the necessity of installing a flow sensor.

The object is solved by a method for measuring the flow rate of a fluid in a conduit system of a combustion appliance, in particular a gas boiler, the method comprising:

> measuring a first temperature value of the fluid at a first point of the conduit system by a first temperature sensor and generating a first temperature signal;
> measuring a second temperature value of the fluid at a second point of the conduit system by a second temperature sensor and generating a second temperature signal, the second point being downstream the first point;
>
> calculating a time delay between the temperature measurement at the first point and at the second point; and
> determining the flow rate based on said time delay and a volume of the fluid in the conduit system between the first point and the second point.

It is noted that the time delay can be calculated after processing the temperature measurements, for example by carrying out a time derivative. Alternatively, the time delay can be calculated for unprocessed temperature measurements, meaning that no particular functions, such as a time derivative, are applied.

The first temperature signal comprises information about the first temperature value. The second temperature signal comprises information about the second temperature value.

Advantageously, the fluid is the water flowing in the conduit connected to the combustion appliance. In this way, the flow rate is calculated without using a flow rate and by an analysis of the dynamic temperatures at two points in the conduit. In particular, already existing sensors, i.e. temperature sensors used for example to monitor flue gas or water temperatures in a boiler, can be reused for the calculation of the flow rate. Specifically, the water flow rate is calculated by using the time delays between temperature sensors, in particular between the time derivatives of the measured temperatures. Information about the flow rate can be used for system optimization and general diagnostics.

In one example, the method comprises determining a first temperature variation (or first temperature fluctuation) at the first point based on the first temperature value and determining a second temperature variation (or second temperature fluctuation) at the second point based on the second temperature value. In this embodiment the first temperature signal comprises information about the first temperature variation and the second temperature signal comprises information about the second temperature variation.

As the water flows through the boiler, it passes multiple temperature sensors. Any fluctuations in the water temperature will be measured by these sensors, but the time of measuring these fluctuations depends on the position of the sensors. As "fluctuation" is understood the temperature change of the water measured by the same temperature sensor. If the water volume between the temperature sensors is known, the time delay can be used to calculate the flow rate: $Q = \dfrac{V}{\Delta t}$, where Q is the flow rate $\left[\dfrac{l}{s}\right]$, V is the water volume [$l$] between the sensors and $\Delta t$ is the time delay [s] between the sensors.

According to an example, the method comprises calculating the time delay with a cross-correlation of the first temperature signal and the second temperature signal. The time delay can be calculated with a cross-correlation of unprocessed temperature signals. Alternatively, the method can comprise calculating the time delay with a cross-correlation of the time derivative of the first temperature signal and the time derivative of the second temperature signal. It is noted that the cross-correlation is a mathematical approach to measure the similarity between two series as a function of the displacement of one relative to the other. In particular, the cross-correlation can be carried out with a portion of the first temperature signal and the method comprises obtaining a cross-correlation signal after the cross-correlation of the temperature signals, wherein said cross-correlation signal is filtered by a low-pass filter, in particular a zero-phase low pass filter. in this way, a sub-second resolution can be acquired. The maximum of this filtered signal is then determined to find the sub-second time delay between the two temperature signals.

To detect the time delay between the temperature signals, in particular the time-derivatives of the temperature signals, the first and second temperature signals, in particular the time derivatives of the first and second temperature signal, need to be compared and a shape similarity between the signals is carried out. To even further highlight the similarity of the signals, the comparison is carried out by taking the time-derivative of the first and second temperature signals. In particular, the method comprises shifting the first temperature signal by the time delay, overlapping the first temperature signal with the second temperature signal, and determining if a signal intensity deviation between the first temperature signal and the second temperature signal is within an acceptance range. If so, the time delay can be taken into account. In addition, the method comprises considering the order of magnitude of the time delay prior to calculating said time delay with cross-correlation.

In another example, the cross-correlation is carried out with temperature signals (first and second temperature signals), in particular time-derivatives of the temperature signals, having a finite signal length, wherein in particular the signal length depends on an expected time shift between the signals, and/or a variability of the signals. Also, the temperature signals can be discrete and/or sampled at a, in particular much, smaller interval than the expected delay. Depending on the expected delay, the sampling interval should be in the order of 50 - 1000 ms.

In addition, the time delay can be determined with a signal of finite length, in particular with a signal of length greater than zero. Also, the calculated flow rate can be comprised between a maximum value and a minimum value during the time delay.

According to another example, the method can comprise determining expected signal variations over time and determining the longest measurable time delay, $t_{max}$. In case the expected signal variation is longer than $t_{max}$, the signals are cut into sections. On the other hand, in case the signal variation is much shorter than $t_{max}$, a signal with a length of $t_{max}$ can be considered.

A temperature fluctuation is required for the calculation of the flow rate. These fluctuations are naturally present in a central heating (CH)-system and originate from temporary changes in the CH-system. For example, temperature fluctuations can originate from:

- Power regulations of the boiler during normal operation that lead to temperature fluctuations that travel through the entire CH system. The combustion appliance (i.e. the boiler) experiences these temperature fluctuations when the water returns to the boiler;
- Valves changing position;
- Changes in air temperature;
- Cascade boilers changing power;

When considering natural fluctuations, it is important to determine where these fluctuations originate. In the present case, the boiler inserts heat between the two temperature sensors. Therefore, it is important that the boiler's power input is relatively stable during a fluctuation. According to an example, the method therefore comprises maintaining the variation of the power input below a predetermined threshold value when determining a first temperature fluctuation at the first point and a second temperature fluctuation at the second point. As a matter of fact, if the power input changes too rapidly, the second temperature sensor will read the power fluctuations in addition to the 'natural' temperature fluctuations from the CH-system. This would make it virtually impossible to determine the flow rate.

In particular, if power is inserted into the water between two sensors, the power input can be calculated by: $P = c_p \dot{m}(T_2 - T_1)$, where $c_p$ is the specific heat capacity of the fluid (water), $\dot{m}$ is the calculated flow rate and $T_1$ and $T_2$ are the measured temperatures. Due to the normal operation of a boiler, the heated water, i.e., power input, is already supplied to the hydraulic system affecting the reading of the two sensors. Accordingly, no dedicated heater is required since it is already part of the system.

In an additional example, the method can comprise initiating the method for measuring the fluid flow rate in a remote manner. Also, the method can comprise collecting data of the combustion appliance related to the fluid flow rate by a logging device connected to a cloud network, wherein in particular the logging device is a connected gateway or a thermostat having a network connection, in particular an Internet connection (WiFi, LoRa, GPRS, etc). A cloud based analysis can then determine the flow rate. Advantageously, the method can comprise generating and sending a feedback information to an end user reporting the measured fluid flow rate, and/or generating and sending a feedback information to an end user in case the measured fluid flow rate outside a reference flow rate range. In particular, end-user feedback can be generated in case of a worrisome flow rates. For example, end-users that have a boiler with a logging device can be informed, by the installer, or the boiler itself in case of an erroneous situation.

Possible feedback scenarios are web interface, portal for installers (Dashboard), installer app on phone when connecting a service tool, user app on phone when connection a capable room thermostat, email notifications, push notifications on connected phone, and/or boiler HMI.

According to one aspect of the invention, a computer program product is provided. This product comprises instructions which, when the program is executed by a computer or control unit, cause the computer or the control unit to carry out the inventive method. In particular, the computer program product comprises instruction that cause the system and/or combustion appliance discussed below to carry out the inventive method.

In a further aspect of the invention, a data processing apparatus is provided. This data processing apparatus comprises a processor for executing the inventive computer program product. Also, a computer readable data carrier is provided, the carrier having stored thereon the inventive computer program product. In addition, data carrier signal is provided, the signal carrying the computer program product.

According to a further aspect of the invention, a system for measuring the flow rate of a fluid in a conduit system of a combustion appliance, in particular a gas boiler, is provided. The system comprises a plurality of temperature sensors comprising at least a first temperature sensor for measuring a first temperature value of the fluid at a first point of the conduit system and a second temperature sensor for measuring a second temperature value of the fluid at a second point of the conduit system, the second point being downstream the first point; and a control unit connected to the first temperature sensor and the second temperature sensor for calculating a time delay between the temperature measurement, in particular a time derivative of the temperature, at the first point and at the second point and for determining the flow rate based on said time delay and a volume of the fluid in the conduit system between the first point and the second point.

According to one aspect of the invention, a combustion appliance, in particular a gas boiler, is provided, the combustion appliance comprising means for carrying out the inventive method and/or comprising the inventive data processing apparatus and/or comprising the inventive system. Examples of combustion appliances can include furnaces, water heaters, boilers, direct/in-direct make-up air heaters, power/jet burners and any other residential, commercial or industrial combustion appliance.

In particular, the appliance including the present system can be a gas boiler for the combustion of hydrogen gas. In this case, it is intended a fuel gas that comprises at least 20% hydrogen or natural gas or mixtures thereof.

In principle, the inventive method can be applied to any heat engine, containing a water volume, water flow and multiple temperature sensors.

In another aspect of the invention, the use of the inventive computer program product, or the inventive data processing apparatus, or of the inventive system is provided. The use is suitable for measuring the flow rate of the fluid in a conduit system of the combustion appliance, without using a flow sensor, and/or monitoring flue gas sided clogging in the combustion appliance, and/or monitoring water sided clogging in the combustion appliance, and/or acquiring information on power input and energy production of the combustion appliance, and/or monitoring the performance of a pump device in the combustion appliance or of a heat/cool engine.

In the figures, the subject-matter of the invention is schematically shown, wherein identical or similarly acting elements are usually provided with the same reference signs.

Figure 1        shows a flow chart of a method for measuring the flow rate according to an example.

Figure 2        shows a schematic representation of a system for measuring the flow rate according to an example.

Figures 3A-B    show a schematic representation of a fluid flowing in a conduit and a corresponding temperature signals according to an example.

Figure 4        shows a schematic representation of a cross-correlation of the temperature signals according to an example.

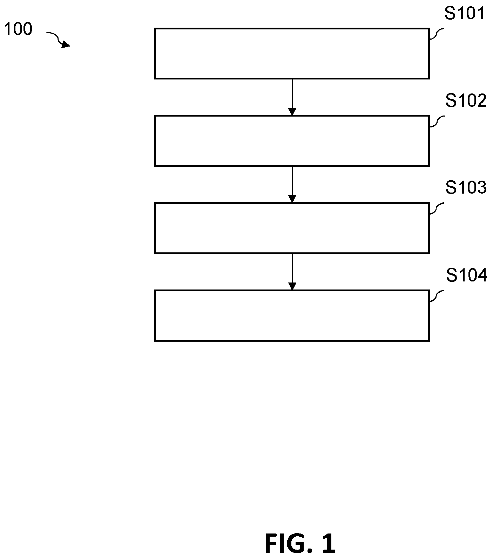

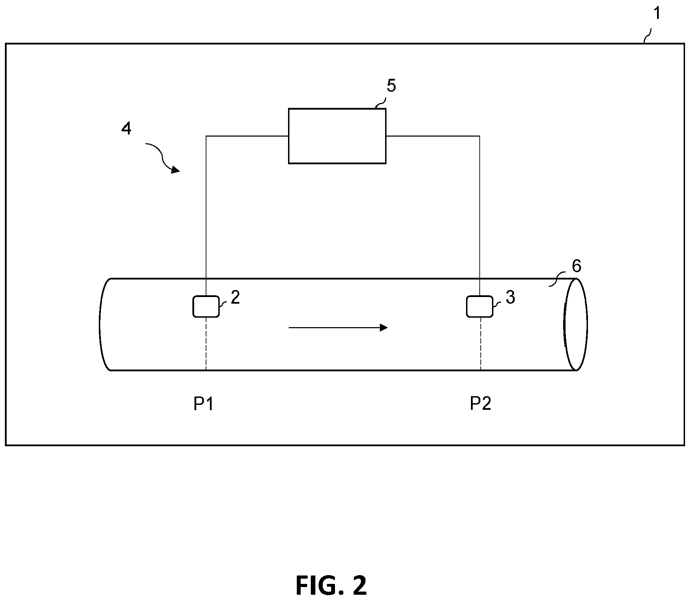

With reference to figures 1 and 2, a flow chart describing a method 100 for measuring a flow rate in a combustion appliance 1 as well as a system 4 for measuring the flow rate in a combustion appliance 1 are shown. At step S101, a first temperature sensor 2 is used to measure a first temperature value T1 of the fluid at a first point P1 of the conduit system 6. Accordingly, a first temperature signal S1 is generated. At step S102, a second temperature sensor 3 is used to measure a first temperature value T2 of the fluid at a second point P2 of the conduit system 6. Accordingly, a second temperature signal S2 is generated. In particular, based on the measured temperature values, a temperature variation $\Delta T$ can be determined and can be identified at the first point P1 as well as at the second point P2. As shown in figure 2, the second point P2 is downstream the first point P1 along a conduit 6. The arrow in the figure indicates the flow direction of the fluid, for example water. A control unit 5 is connected to the first temperature sensor 2 and to the second temperature sensor 3, in order to acquire the temperature values and calculate a time delay $\Delta t$ between the temperature measurement at the first point P1 and at the second point P2, at step S103. In other words, the time delay $\Delta t$ can correspond to the time needed by a fluid portion to pass from the first point P1 to the second point P2. At step S104, based on the calculated time delay $\Delta t$ and the volume of the fluid in the conduit system 6 between the first point P1 and the second point P2, the flow rate can be determined. In fact, If the volume of the fluid between the temperature sensors is known, the flow rate can be calculated by dividing the volume by the time delay Δt, i.e.

$$Q = \frac{V}{\Delta t}.$$

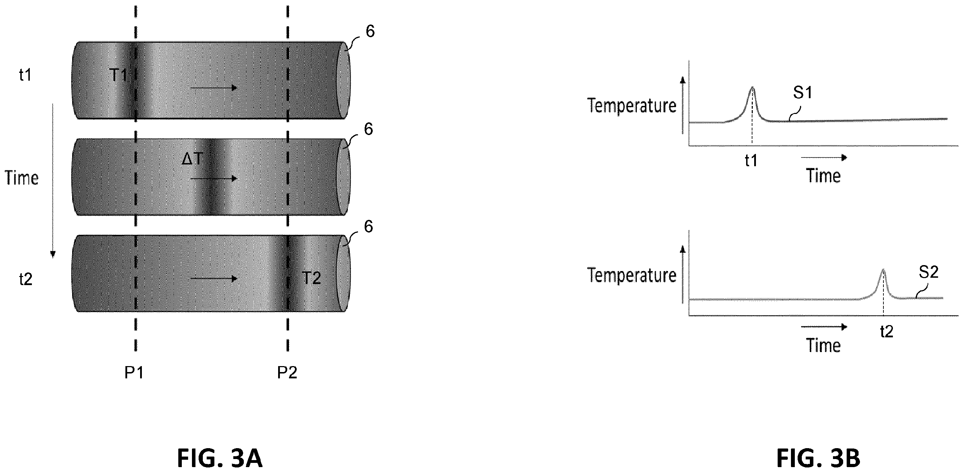

Figures 3A and 3B better clarify the above concept. The fluid (for example water) flows through the conduit 6 and passes two temperature sensors at points P1 and P2, respectively. The fluid temperature is indicated by the grey scale (darker grey is warmer than lighter grey) in the figure 3A. As an example, the water is 'cold' except for a small 'hot' (dark) segment. The water moves from left to right and the hot segment reaches the first sensor 2 at first point P1 first (time t1). This leads to a short increase in the temperature of the first sensor 2. The hot segment moves downstream and a while later (time t2), it reaches the second sensor 3 at second point P2, which causes the same or very similar short temperature increase. The temperature signals that are measured by these sensors are shown in figure 3B.

The first temperature signal S1 from the first sensor 2 has a very similar shape to the second temperature signal S2 from the second sensor 3. This is crucial to detect the time delay Δt between the signals. The time delay corresponds with the time that the fluid portion needs to flow from the first point P1 to the second point P2. It corresponds the difference of the times t2 and t1. To even further highlight the similarity of the signals, the time-derivative of the signals can be taken. The technique used to calculate the time delay Δt between the two signals is called 'cross-correlation'. The mathematical description is shown below.

$$R_{fg}[m] = (f \star g)[m] = \sum_{n=-\infty}^{\infty} f^*[n]g[n+m]$$

In theory, the cross-correlation can be calculated for the entire signal, but that isn't necessary for this purpose. A selective cross-correlation can be employed to reduce the computational effort and to increase the reliability of the measured time delay. In case of a gas-fired boiler, the flow direction is always the same, so the second sensor 3 will always measure temperature fluctuations later than the first sensor 2. The signal S1 from the first sensor 2 will therefore only have to be shifted forward. Furthermore, the order of magnitude of the time delay Δt is known prior to the calculation. The cross-correlation therefore only needs to be done with a portion of the first signal S1. There is no point in shifting the signal further than what can realistically be expected.

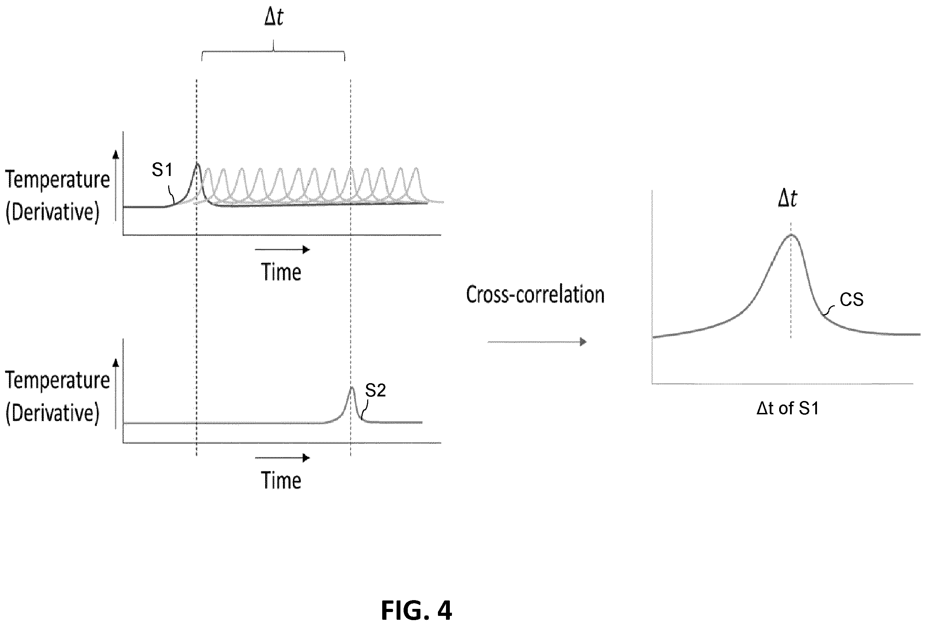

The cross-correlation of the first and second temperature signals S1, S2 is illustrated in figure 4. The first temperature signal S1 is shifted across the second temperature signal S2. The cross-correlation signal CS reaches a maximum when the shift is exactly 'Δt', that is when first the sensor signal S1 is shifted exactly 'Δt' across the second temperature signal S2. The cross-correlation can be done with the temperature values or the temperature derivatives.

The cross-correlation is done with signals of a finite length. The required signal length depends on the expected time shift between the signals. For example, if the minimum realistic flow rate is $Q_{min}$ and the volume is V, the longest measurable time delay is

$$t_{max} = \frac{V}{Q_{min}}.$$

Also, the required signal length depends on the variability of the temperature signals. The signals must show large enough fluctuations to lead to a distinctive peak in the cross-correlation graph. If both signals are flat lines, the cross-correlation won't result in a reliable delay determination. It is better if both signals show large fluctuations so that the cross-correlation will show a very large peak when the signals are shifted by 'Δt'. Regarding the length of the signals; if the expected fluctuations are much shorter than $t_{max}$, a signal with a length of $t_{max}$ will suffice. If the expected fluctuations are longer than $t_{max}$, the signals must be cut into sections with the length of the fluctuations.

It is noted that the time delay Δt is determined with a signal of length $t_{segment}$ (>0). This means that the flow rate is also calculated over a period of $t_{segment}$. If the flow rate changes during this time period, the calculated flow rate will lie between the highest and the lowest flow rate during that period.

**Reference Signs**

| | |
|---|---|
| 1 | Combustion appliance |
| 2 | First temperature sensor |
| 3 | Second temperature sensor |
| 4 | System |
| 5 | Control unit |
| 6 | Conduit system |
| T1 | Temperature at first point |
| T2 | Temperature at second point |
| Δt | time delay |
| P1 | First point |
| P2 | Second point |
| S1 | First temperature signal |
| S2 | Second temperature signal |
| CS | Cross-correlation signal |
| 100 | Method |

**Claims**

1. Method (100) for measuring the flow rate of a fluid in a conduit system (6) of a combustion appliance (1), in particular a gas boiler, the method (100) comprising:

   measuring (S101) a first temperature value (T1) of the fluid at a first point (P1) of the conduit system (6) by a first temperature sensor (2) and generating a first temperature signal (S1);
   measuring (S102) a second temperature value (T2) of the fluid at a second point (P2) of the conduit system (6) by a second temperature sensor (3) and generating a second temperature signal (S2), the second point (P2) being downstream the first point (P1);
   calculating (S103) a time delay ($\Delta t$) between the temperature measurement at the first point (P1) and at the second point (P2); and
   determining (S104) the flow rate based on said time delay ($\Delta t$) and a volume of the fluid in the conduit system (6) between the first point (P1) and the second point (P2).

2. Method (100) according to claim 1, **characterized in that** the method (100) comprises determining a first temperature variation ($\Delta T1$) at the first point (P1) based on the first temperature value (T1) and determining a second temperature variation ($\Delta T2$) at the second point (P2) based on the second temperature value (T2).

3. Method (100) according to claim 1 or 2, **characterized in that** the method (100) comprises calculating the time delay ($\Delta t$) with a cross-correlation of the first temperature signal (S1) and the second temperature signal (S2).

4. Method (100) according to claim 3, **characterized in that**

   a. the cross-correlation is carried out with a portion of the first temperature signal (S1); and/or
   b. the method (100) comprises obtaining a cross-correlation signal (CS) after the cross-correlation of the temperature signals, wherein said cross-correlation signal is filtered by a low-pass filter, in particular a zero-phase low pass filter.

5. Method (100) according to any one of claims 1 to 4, **characterized in that** the method (100) comprises comparing the first temperature signal (S1) and the second temperature signal (S2) by taking the time-derivative of the first and second temperature signals (S1, S2).

6. Method (100) according to any one of claims 3 to 5, **characterized in that** the method (100) comprises

   a. shifting the first temperature signal (S1) by the time delay ($\Delta t$), overlapping the first temperature signal (S1) with the second temperature signal (S2), and determining if a signal intensity deviation between the first temperature signal (S1) and the second temperature signal (S2) is within an acceptance range; and/or
   b. considering the order of magnitude of the time delay ($\Delta t$) prior to calculating said time delay ($\Delta t$) with cross-correlation.

7. Method (100) according to any one of claims 3 to 6, **characterized in that**

   a. the cross-correlation is carried out with temperature signals (S1, S2) having a finite signal length, wherein in particular the signal length depends on an expected time shift between the signals, and/or a variability of the signals; and/or
   b. the temperature signals (S1, S2) are discrete and are sampled at 1 Hz; and/or
   c. the time delay ($\Delta t$) is determined with a signal of finite length, in particular with a signal of length greater than zero, and/or
   d. the calculated flow rate is comprised between a maximum value and a minimum value during the time delay ($\Delta t$).

8. Method (100) according to any one of claims 2 to 7, **characterized in that** the method comprises determining expected signal variations over time and determining the longest measurable time delay, $t_{max}$, wherein:

   a. cutting signals into sections, if the expected signal variation is longer than $t_{max}$; or
   b. considering a signal with a length of $t_{max}$, if the signal variation is much shorter than tmax.

9. Method (100) according to any one of claims 1 to 8, **characterized in that** the method (100) comprises maintaining the variation of the power input below a predetermined threshold value when determining a first temperature fluctuation at the first point (P1) and a second temperature fluctuation at the second point (P2).

10. Method (100) according to any one of claims 1 to 9, **characterized in that** the method (100) further comprises:

    a. initiating the method (100) for measuring the fluid flow rate in a remote manner; and/or
    b. collecting data of the combustion appliance (1) related to the fluid flow rate by a logging device connected to a cloud network, wherein in particular the logging device is a connected gateway or a thermostat having a network connection, in particular an Internet connection; and/or

c. generating and sending a feedback information to an end user reporting the measured fluid flow rate; and/or

d. generating and sending a feedback information to an end user in case the measured fluid flow rate is outside a reference flow rate range.

11. Computer program product comprising instructions which, when the program is executed by a computer or control unit, cause the computer or the control unit to carry out the method according to one of the claims 1 to 10.

12. Data processing apparatus comprising a processor for executing the computer program product of claim 11, or computer readable data carrier having stored thereon the computer program product of claim 11, or data carrier signal carrying the computer program product of claim 11.

13. System (4) for measuring the flow rate of a fluid in a conduit system (6) of a combustion appliance (1), in particular a gas boiler, the system (4) comprising:

a plurality of temperature sensors comprising at least a first temperature sensor (2) for measuring a first temperature value (T1) of the fluid at a first point (P1) of the conduit system (6) and a second temperature sensor (3) for measuring a second temperature value (T2) of the fluid at a second point (P2) of the conduit system (6), the second point (P2) being downstream the first point (P1); and

a control unit (5) connected to the first temperature sensor (2) and the second temperature sensor (3) for calculating a time delay ($\Delta t$) between the temperature measurement at the first point (P1) and at the second point (P2) and for determining the flow rate based on said time delay ($\Delta t$) and a volume of the fluid in the conduit system (6) between the first point (P1) and the second point (P2).

14. Combustion appliance (1), in particular a gas boiler, comprising means for carrying out the method according to one of the claims 1 to 10 and/or comprising the data processing apparatus of claim 12 and/or comprising the system (4) according to claim 13, wherein in particular the combustion appliance (1) uses a fuel gas having at least 20% hydrogen or natural gas.

15. Use of the computer program product according to claim 11, or of the data processing apparatus according to claim 12, or of the system (4) according to claim 13 for:

a. measuring the flow rate of the fluid in a conduit system (6) of the combustion appliance (1), without using a flow sensor; and/or

b. monitoring flue gas sided clogging in the combustion appliance (1); and/or

c. monitoring water sided clogging in the combustion appliance (1); and/or

d. acquiring information on power input and energy production of the combustion appliance (1); and/or

e. monitoring the performance of a pump device in the combustion appliance (1) or of a heat/cool engine.

100

S101

S102

S103

S104

**FIG. 1**

FIG. 2

FIG. 3B

FIG. 3A

FIG. 4

Europäisches
Patentamt

European
Patent Office

Office européen
des brevets

# EUROPEAN SEARCH REPORT

Application Number

EP 22 19 5755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 10 041 844 B1 (BRADY NIALL [IE] ET AL)<br>7 August 2018 (2018-08-07)<br>* column 14, line 64; figure 7 *<br>* column 14, line 1 - line 5 *<br>* column 14, line 43 - line 57 *<br>* column 8, line 54 - line 57 *<br>* column 14, line 58 - column 15, line 17<br>*<br>* page 8, line 24 - line 26 *<br>* column 12, line 14 - line 20 *<br>----- | 1-5,7,8,<br>10-15<br>6,9 | INV.<br>G01F1/704<br>G01F1/708<br>G01F1/7084<br>G01F1/712 |
| X | US 2011/106397 A1 (MUTA KENJI [JP] ET AL)<br>5 May 2011 (2011-05-05)<br>* paragraphs [0048], [0059] - [0062],<br>[0067]; figures 1,5 *<br>----- | 1,3 | |
| X | US 2008/000307 A1 (GYSLING DANIEL L [US]<br>ET AL) 3 January 2008 (2008-01-03)<br>* paragraphs [0067], [0125]; figures<br>2,3,4,6 *<br>----- | 1,3 | |
| X | FR 2 914 740 A1 (PEUGEOT CITROEN<br>AUTOMOBILES SA [FR])<br>10 October 2008 (2008-10-10)<br>* page 5, line 19 - line 20; figure 4 *<br>* page 7 *<br>----- | 1 | TECHNICAL FIELDS<br>SEARCHED (IPC)<br>G01F<br>G01K |
| A | EP 0 773 432 A2 (BOC GROUP INC [US])<br>14 May 1997 (1997-05-14)<br>* column 17, line 45; figure 9A *<br>----- | 4 | |

The present search report has been drawn up for all claims

| Place of search | Date of completion of the search | Examiner |
|---|---|---|
| The Hague | 9 February 2023 | Reeb, Bertrand |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 5755

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2023

| Patent document cited in search report | | Publication date | Patent family member(s) | | | Publication date |
|---|---|---|---|---|---|---|
| US 10041844 | B1 | 07-08-2018 | NONE | | | |
| US 2011106397 | A1 | 05-05-2011 | AT | 544051 | T | 15-02-2012 |
| | | | CN | 101910803 | A | 08-12-2010 |
| | | | EP | 2239545 | A1 | 13-10-2010 |
| | | | JP | 2009168688 | A | 30-07-2009 |
| | | | KR | 20100099224 | A | 10-09-2010 |
| | | | RU | 2010133713 | A | 27-02-2012 |
| | | | US | 2011106397 | A1 | 05-05-2011 |
| | | | WO | 2009090805 | A1 | 23-07-2009 |
| US 2008000307 | A1 | 03-01-2008 | US | 7261002 | B1 | 28-08-2007 |
| | | | US | 2008000307 | A1 | 03-01-2008 |
| FR 2914740 | A1 | 10-10-2008 | NONE | | | |
| EP 0773432 | A2 | 14-05-1997 | NONE | | | |

EPO FORM P0459

For more details about this annex : see Official Journal of the European Patent Office, No. 12/82